# EUROPEAN PATENT SPECIFICATION

(11) **EP 1 116 636 B1**
(45) Date of publication and mention of the grant of the patent: **04.08.2004**
(21) Application number: 00306800.4
(22) Date of filing: 09.08.2000
(51) Int. Cl.: B61F 5/02, B60G 7/00, B60G 13/16, F16F 7/01, F16F 7/104

(54) **Railway vehicle and railway vehicle use bogie car**
Schienenfahrzeug, insbesondere Schienenfahrzeug mit einem Drehgestell
Véhicule ferroviaire , notamment véhicule ferroviaire avec un bogie

(30) Priority: 14.01.2000 JP 2000010108
(43) Date of publication of application: 18.07.2001
(73) Proprietor: Hitachi, Ltd., Chiyoda-ku, Tokyo 101-8010 (JP)
(72) Inventor: Sebata, Michio, Kudamatsu-shi, Yamaguchi 744-0061 (JP); Makino, Toshiaki, Kudamatsu-shi, Yamaguchi 744-0062 (JP); Hiraishi, Motomi, Kudamatsu-shi, Yamaguchi 744-0011 (JP); Nakamura, Minoru, Kudamatsu-shi, Yamaguchi 744-0042 (JP)
(74) Representative: Hackney, Nigel John

(56) References cited:
- WO-A-85/05425
- DE-A- 2 533 088
- US-A- 4 744 604
- US-A- 5 775 049

## Description

The present invention relates to a railway vehicle.

As described on Japanese application utility model publication No. Sho 58-1406, a bogie frame and a car body of a railway vehicle are connected according to a traction link (hereinafter it is called as a "link"). A rubber bush is arranged at both ends of the link. Each rubber bush is designed to endure fully against a compression load which occurs sometimes along the direction of the link. Further, the link is connected to a connection member (such as a center pin), which is projected from a lower face of the car body.

Further, as a sound shielding panel using a particle-shaped member, there is Japanese application patent laid-open publication No. Hei 10-266388. In the interior of this panel, e.g. an aluminium honeycomb panel used in a floor of a car body, powder members having a particle size of 30 - 1000 µm are accommodated, thereby providing vibration control in an upper and a lower direction of the floor of the car body.

The vibrations of the forward and backward direction (running direction) of a vehicle are transmitted to its car body side through the two rubber bushes and link. For this reason, noises in the inner side car becomes high. In particular, solid propagation vibrations having a rotation frequency component of 80-300 Hz (generated by an unbalance of a drive system) are transmitted to the bogie frame. These vibrations are made to vibrate the floor of the car body, accordingly, there is a problem about the increase of the noise in the car.

In the rotation vibrations generated by the unbalance in the drive system, a component having a size of less than 10 m/s² from one time to four times the rotation vibration component f1 of an electric motor shaft is comparatively noticeable. These rotation vibration components f1-4f1 are transmitted as the solid propagation vibrations to the car body through the link to become upper and lower vibrations of the floor of the car body, and appear as the noise in the car.

In particular, during acceleration of the car, a 2f1 component is generated in the running direction, in the right and left direction, and in the upper and lower direction. In particular, the vibrations in the running direction contribute to the increase of the noise in the car. Further, during deceleration and coasting, an increase occurs in vibrations in the running direction having an f1 component or a 3f1 component.

For example, when the rotation vibration component of f1 is 80 Hz, the rotation vibration component of 2f1 is 160 Hz, the rotation vibration component of 3f1 is 240 Hz and the rotation vibration component of 4f1 is 320 Hz. For this reason, it is required to reduce the vibrations at more than about 100 Hz.

US 4744604 teaches a vibration damper for a road planer, where a prime mover and a tool are mounted on a sub-frame which includes members having compartments adapted to receive lead shot particles. The vibrational energy of the prime mover and tool is absorbed by the particles.

The object of the present invention is to provide a railway vehicle wherein noises in the car can be reduced by a simple construction.

According to the invention this object is achieved by the railway vehicle according to claim 1.

### Brief Description of Drawings:

Fig. 1 is a side view showing a traction link portion of a railway vehicle and a railway vehicle use bogie car of one embodiment according to the present invention;
Fig. 2 is a plan view showing a bogie car of a railway vehicle having one embodiment according to the present invention; and
Fig. 3 is an explanation view showing a vibration characteristic of the railway vehicle use bogie car.

### Description of the Invention:

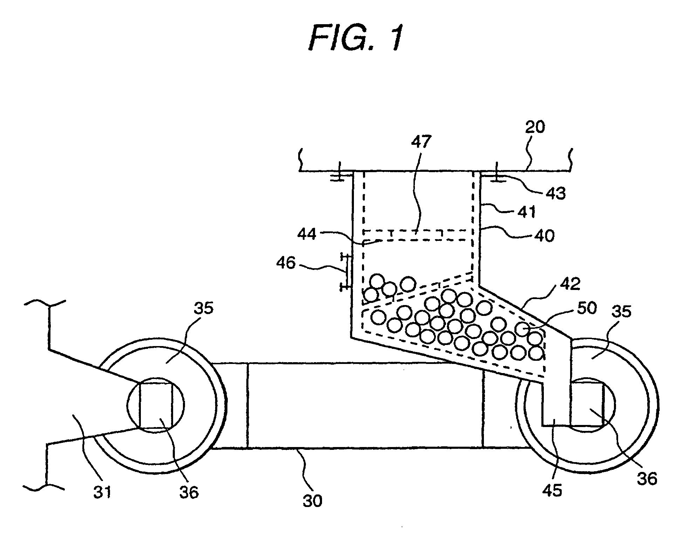

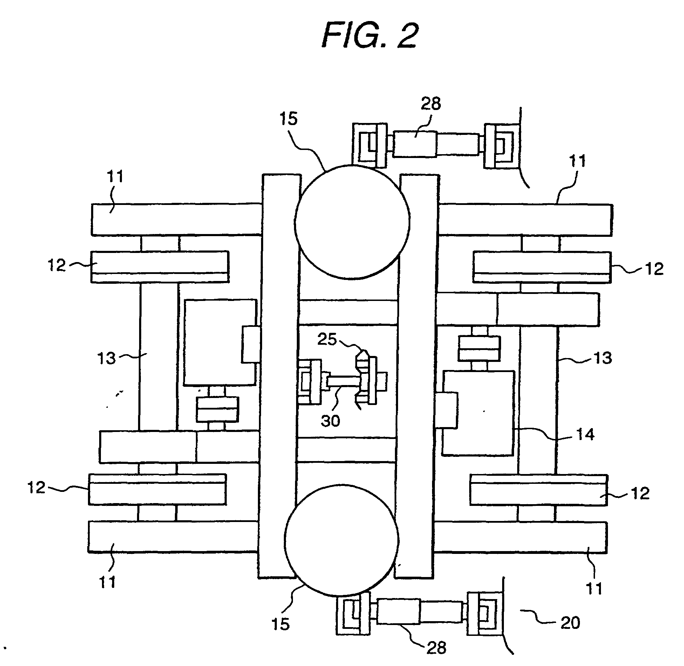

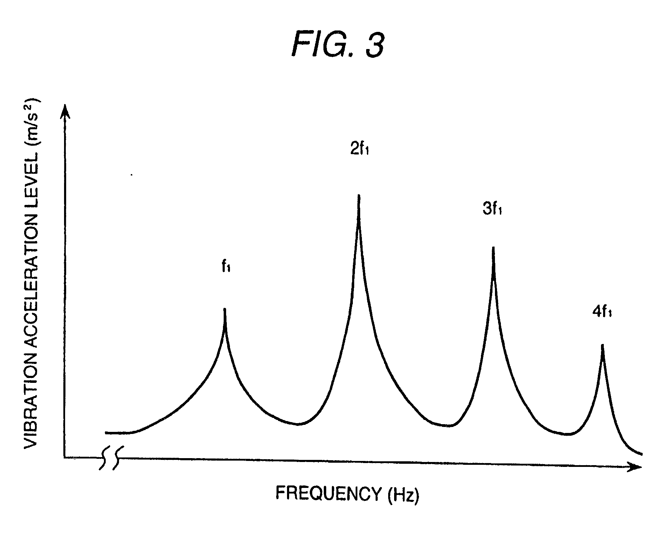

One embodiment of a railway vehicle and a railway vehicle use bogie car according to the present invention will be explained referring to from Fig. 1 to Fig. 3. As shown in Fig. 2, a bogie frame 11 of a bogie car is supported by two car axles 13 having a vehicle wheel 12 and supports a reduction gear unit which comprises an electric motor 14 for driving the wheel axles 13 and gears. The bogie car frame 11 supports a car body 20 through an air cushion member 15.

A connection member 40 (generally called a "center pin"), which projects from a lower face of the car body and the bogie frame 11 are connected via a traction link 30 (referred hereinafter as a "link"). The link 30 transmits a backwards and forwards force and is arranged along a horizontal direction (the running direction).

End portions of a right part and a left part of the bogie frame 11 are connected to the car body 20 through yaw dampers 28. The ends of each yaw damper 28 are connected to the bogie car frame 11 and the car body 20 respectively through a rubber bush similarly to the link 30. The yaw damper 28 can prevent the meandering movement during running of the vehicle.

The end portions of the link 30 are connected to the bogie car 11 and the connection member 40 respectively through a rubber bush 35 and a pin 36, etc.. The connection member 40 is inclined to direct a connection portion between the car body 20 and the link 30. The cross-section of a lower end portion of a coupling member 45 of the connection member 40 is a up haved U shape. The link 30 is arranged in the horizontal direction of the running direction of the car body 20 and penetrates through the above-stated U-shaped portion of the coupling member 45. The tip end of a second portion 42 of the connection member 40 has the coupling member 45.

The bogie frame 11 has a U-shape cross-sectional coupling 31. The link 30 is connected to the coupling member 31 of the bogie frame 11 and a coupling member 45 of the connection member 40. This construction uses a known technique.

The connection member 40 has a horizontal cross-section having a quadrilateral shape formed from a plate which is welded to constitute its four faces. An upper face flange 43 is fixed to a lower face of the car body 20 through bolt means. An interior portion of the plate constituting the four faces has reinforcement plates 44 welded to it with plural stages in the upper and lower direction. In each reinforcement plate 44, a hole 47 is opened in a central portion.

In a space of the interior portion of the connection member 40, a large number of particles (hereinafter particle-shaped members) 50 are accommodated to control vibration. The particle-shaped members 50 are inserted from an opening which is provided on a side face of the connection member 40. This opening is sealed with a water-seal by a lid 46 or a sealing agent and the like. The particle-shaped members 50 which are inserted from the upper portion can be dropped down by inclining the connection member 40.

Each particle-shaped member 50 is a sphere member made using a ferro system or a lead system material. A typical particle diameter of a particle-shaped member 50 is 0.1 mm - 10 mm. Each particle-shaped member 50 does not need to have the sphere shape. In a manufacturing processes, the particle-shaped member 50 can be formed using a non-spherical shape member or a multi-angle crushed shape member.

It is preferable to employ a large filling-up density of the particle-shaped members 50. When the filling-up density of the particle-shaped members 50 is small, the damping effect becomes small, but when the filling-up density of the particle-shaped members 50 is excessively large the movement of the particle-shaped members 50 becomes bad and then the vibration control effect is lessened. Further, since a space of the interior portion of the connection member 40 is large, when the filling-up density of the particle-shaped memben 50 becomes excessively larger, it leads to a weight increase.

A filling-up amount of the particle-shaped members 50 is determined according to the various experimental results. According to the filling-up amount of the particle-shaped member 50, the position of the above stated opening for accommodating the particle-shaped members 50 is determined. The amount of the particle-shaped members 50 shown in Fig. 1 shows one example.

It is preferable to employ a comparatively large particle size for the particle-shaped members 50. For example, the particle diameter of the particle-shaped members 50 can be several mm. When the particle size of the particle-shaped members 50 is small as shown in the powder member, the manufacturing cost becomes high. When the particle size of the particle-shaped members 50 is large, the particle-shaped members 50 can be manufactured with the comparative low cost.

Further, to prevent corrosion or abrasion of the particle-shaped members 50, an absorption agent (for example, red ocher or the like) can be enclosed.

With the above stated construction, when the bogie frame 11 vibrates according to the drive system vibrations, the connection member 40 vibrates through the link 30. With this, the particle-shaped members 50 accommodated in the connection member 40 vibrate, and according to the collision of the particle-shaped members 50 with each other and the collision between the plate of the connection member 40 and the particle-shaped members 50, the vibrations in the connection member 40 can be reduced and the transmission of the vibrations to the car body 20 can be reduced.

Further, in proportion to the increase in a specific gravity of the particle-shaped members 50, the vibration energy of the connection member 40 during the collision time is converted to a kinetic energy of the particle-shaped members 50 with a good efficiency. Accordingly, the vibration energy becomes small and the vibrations of the connection member 40 can be reduced.

In particular, looking at the vibrations of the drive system, since movement in the backwards and forwards direction of the particle-shaped members 50 in the interior portion of the connection member 40 does not need to go against the gravity force (it is unnecessary to have the vibrations of more than 10 m/s²), the particle-shaped members 50 can be activated by a small excitation force.

For this reason, the vibrations in the backwards and forwards direction which are solid-propagated to the car body 20 from the connection member 40 can be reduced. Accordingly, the vibration in the upper and lower directions on the floor face of the car body 20 is reduced, the noises in the inner side car which radiates from the floor face of the car body 20 can be reduced.

Namely, according to the backwards and forwards vibrations which are solid-propagated through the link 30, the particle-shaped members 50 repeat the collisions with the minute ranges. For this reason, the vibrational energy generated in the connection member 40 is converted to the kinetic energy of the particle-shaped members 50. As a result, the vibrations in the connection member 40 can be reduced.

In comparison with the known case where the powder shape member is installed to the floor face of the car body 20, the reduction of the vibrations in the backwards and forwards direction of the connection member 40 has large affect. Against the vibrations in the backwards and forwards direction of the connection member 40, even considering the small excitation force, the particle-shaped members 50 move actively (it is unnecessary to have the vibration of more than 10 m/s² which resists the gravity).

Accordingly, since the backwards and forwards vibrations at the connection member 40 is restrained, the increase in the upper and lower vibrations on the floor face of the car body 20 can be restrained, and the noises in the inner side car can be reduced. Further, since the connection member 40 has a comparative light weight, the vibrations can be reduced even with light weight apparatus.

Further, during the acceleration running time, the deceleration running time and the coasting running time, since the vibrations in the forward and backward direction increases further, the vibration control effect can be remarkable further. The movement of the particle-shaped members 50 in this case, against a large excitation force, is greater, i.e. the vibration control effect is increased.

Further; a longitudinal cross-section shape of the connection member 40 is formed with a substantially L shape. Namely, the connection member 40 comprises of a first portion 41 which-extends to a lower portion of the lower face of the car body 20 and the second portion 42 which extends to a horizontal direction in the lower portion of the above stated first portion 41.

The traction link 30 is connected to a tip end of the coupling member 45 of the second portion 42 of the connection member 40 which is projected in the horizontal direction. The particle shape member 50 is accommodated in the interior portion of the second portion 42 of the connection member 40.

As stated in above, since the traction link 30 is connected to the horizontally extended second portion 42 of the connection member 40, the second portion 42 of the connection member 40 can be bent easily in the upper and lower direction. In this second portion 42 of the connection member 40, the particle-shaped members 50 are accommodated, then the particle-shaped members 50 can be moved actively and the vibrations can be reduced easily.

Further, a lower face of the second portion 42 of the connection member 40 is inclined. Accordingly, the particle-shaped members 50 can be moved easily and the vibrations can be reduced.

In the above-stated embodiment according to the present invention, the connection member 40 and the bogie frame 11 are connected according to one traction link 30, however the connection member 40 and the bogie frame 11 may be connected according to plural traction links.

According to the present invention, with a simple construction in which particle-shaped members 50 are accommodated movably in a connection member 40 for connecting a bogie car and a car body 20, the transmission of the vibrations which generate from the drive system can be restrained; accordingly, the noise inside the car can be reduced.

## Claims

1. A railway vehicle having:
a bogie frame (11);
a car body (20) having a connection member (40), the connection member being connected via a traction link (30) to the bogie frame (11);
**characterised in that**:
the connection member (40) has a first portion (41) extending from the lower face of the car body (20) and a second portion (42) extending away from a lower end of the first portion (41) substantially horizontally;
the traction link (30) is connected to the second portion (42); and
a plurality of particles (50) are movably accommodated in the interior of the second portion (42) of the connection member (40) to reduce vibrations in the connection member (40).

2. A railway vehicle according to claim 1, wherein a lower face of the second portion (42) is inclined to the running direction.

## Patentansprüche

1. Schienenfahrzeug mit:
einem Drehgestellrahmen (11);
einem Wagenkörper (20) mit einem Verbindungselement (40), wobei das Verbindungselement über eine Zugverbindung (30) mit dem Drehgestellrahmen (11) verbunden ist,
**dadurch gekennzeichnet, daß**
das Verbindungselement (40) einen ersten Abschnitt (41), der sich von der unteren Seite des Wagenkörpers (20) erstreckt, und einen zweiten Abschnitt (42), der sich ausgehend von einem unteren Ende des ersten Abschnitts (41) im wesentlichen horizontal erstreckt, aufweist,
die Zugverbindung (30) mit dem zweiten Abschnitt (42) verbunden ist, und
mehrere Teilchen (50) beweglich im Inneren des zweiten Abschnitts (42) des Verbindungselements (40) untergebracht sind, um Vibrationen in dem Verbindungselement (40) zu reduzieren.

2. Schienenfahrzeug nach Anspruch 1, wobei eine untere Seite des zweiten Abschnitts (42) zur Fahrtrichtung geneigt ist.

## Revendications

1. Véhicule ferroviaire ayant :
un châssis de bogie (11),
une caisse de wagon (20) ayant un élément de connexion (40), l'élément de connexion étant connecté au châssis de bogie (11) via une bielle de traction (30),
**caractérisé en ce que** :
l'élément de connexion (40) a une première partie (41) s'étendant à partir de la face inférieure de la caisse de wagon (20), et une seconde partie (42) s'étendant loin d'une extrémité inférieure de la première partie (41) sensiblement horizontalement,
une bielle de traction (30) est connectée à la seconde partie (42), et
une pluralité de particules (50) sont reçues de manière mobile à l'intérieur de la seconde partie (42) de l'élément de connexion (40), pour réduire les vibrations dans l'élément de connexion (40).

2. Véhicule ferroviaire selon la revendication 1, dans lequel une face inférieure de la seconde partie (42) est inclinée par rapport à la direction de déplacement.
